# EUROPEAN PATENT SPECIFICATION

(11) **EP 1 630 064 B1**
(45) Date of publication and mention of the grant of the patent: **31.01.2007**
(21) Application number: 04425641.0
(22) Date of filing: 30.08.2004
(51) Int. Cl.: B62D 1/04

(54) **Automotive Cloche-Like Steering Wheel**
Glockenartiges Kraftfahrzeug-Lenkrad
Volant d'automobile en forme de cloche

(43) Date of publication of application: 01.03.2006
(73) Proprietor: C.R.F. SOCIETA' CONSORTILE PER AZIONI, 10043 Orbassano (Torino) (IT)
(72) Inventor: Masoero, Giorgio, Strada Torino, 50 10043 Orbassano (IT); Zoldano, Cristina, Strada Torino, 50 10043 Orbassano (IT); Pizzoni, Roberto, Strada Torino, 50 10043 Orbassano (IT); Seccardini, Riccardo, Strada Torino, 50 10043 Orbassano (IT); Camardella, Pietro, Strada Torino, 50 10043 Orbassano (IT); Rambaldini, Amon, Strada Torino, 50 10043 Orbassano (IT)
(74) Representative: Cerbaro, Elena

(56) References cited:
- EP-A- 1 000 834
- DE-U1- 20 300 016
- US-A1- 2001 007 294
- US-A1- 2003 131 681
- PATENT ABSTRACTS OF JAPAN vol. 011, no. 247 (M-615), 12 August 1987 (1987-08-12) & JP 62 055263 A (MAZDA MOTOR CORP), 10 March 1987 (1987-03-10)

## Description

The present invention relates to an automotive cloche-like steering wheel.

Cloche-like steering wheels for aircraft and racing cars are known comprising a supporting base or central hub fixed to a rotary steering column, and two grips connected specularly to the supporting base.

In this type of steering wheel, the supporting base is fitted with numerous control buttons by which the driver controls all or at any rate most of the vehicle functions.

Steering wheels for passenger vehicles are also known comprising a circular outer grip fixed to the supporting base by a number of spokes.

In this type of steering wheel, the spokes are fitted with control buttons for performing simple functions, such as sounding the horn, radio tuning and volume control, CD selection, vehicle speed control, telephone on/off functions, gear shifting, etc., and the remaining controls are normally arranged partly on two levers fitted to the control lever block underneath the steering wheel, and partly on the dashboard, instrument panel, tunnel, and vehicle doors, in various arrangements depending on the type of vehicle.

In neither type of steering wheel, however, are the control buttons arranged particularly ergonomically on the supporting base. In passenger vehicles, in fact, the most commonly used controls are not arranged on the steering wheel, and can only be operated by the driver taking one hand off the wheel; whereas racing cars have so many control buttons that not all can be thumb-operated without the driver's hands being detached from the grips.

Documents US 2001/0007294 A1 and JP 620 55 263 A show each a steering wheel comprising a supporting base integral with a pair of grips and the rest of features of the preamble of claim 1, whereby the steering wheel cannot be easily customized.

It is a main object of the present invention to provide an automotive cloche-like steering wheel designed to at least partly eliminate the drawbacks of known steering wheels.

It is a further object of the present invention to provide an automotive cloche-like steering wheel, in which the control buttons are so arranged as to enable thumb-operation by the driver of the most commonly used controls without the driver's hands being detached from the grips.

According to the present invention, there is provided an automotive cloche-like steering wheel comprising a supporting base fixed to a rotary steering column, a pair of grips connected to said supporting base, and control buttons arranged partly on said grips and partly on said supporting base; characterized in that each of said grips comprises a cavity housing a guide support for at least one button and at least an appendix which fits frictionally inside a, corresponding seat in said supporting base.

Conveniently, the left-hand grip comprises a left-turn indicator control button and a headlight flash control button, and the right-hand grip comprises a right-turn indicator control button, and a pulsating-mode windscreen-wiper control button.

A preferred, non-limiting embodiment of the invention will be described by way of example with reference to the accompanying drawings, in which:
Figure 1 shows a front view of a cloche-like steering wheel in accordance with the invention;
Figure 2 shows a view in perspective of a customized grip of the steering wheel;
Figure 3 shows an exploded view of a detail in Figure 1.

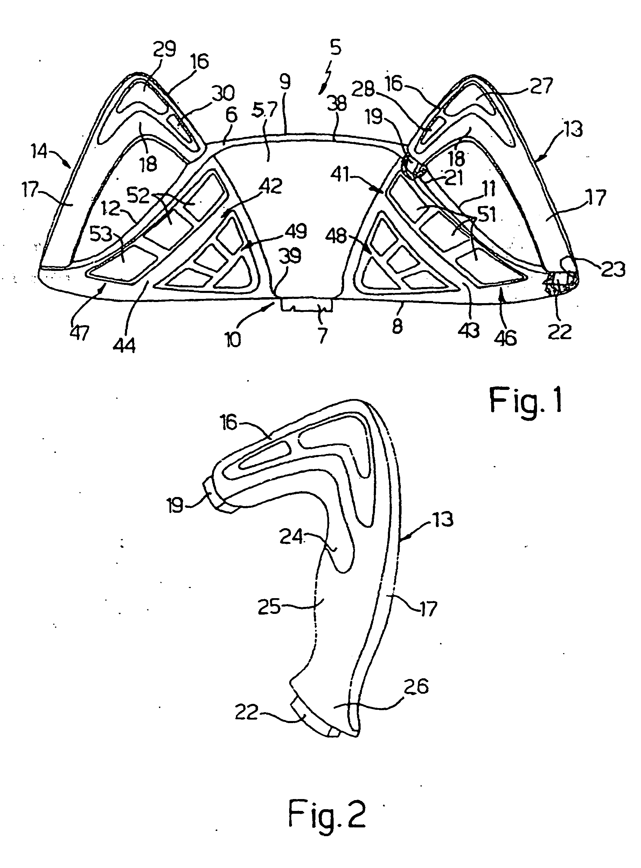

Number 5 in Figure 1 indicates as a whole an automotive cloche-like steering wheel, in particular for passenger cars. Steering wheel 5 comprises a supporting base or hub 6 fixed to the end of a rotary steering column 7 of the vehicle, and substantially in the form of an isosceles trapezium comprising a major base 8, a minor base 9, and two sloping sides 11 and 12 curving slightly towards a central portion 10 of supporting base 6. Steering wheel 5 also comprises two grips 13 and 14 connected removably and specularly to supporting base 6, as described in detail later on.

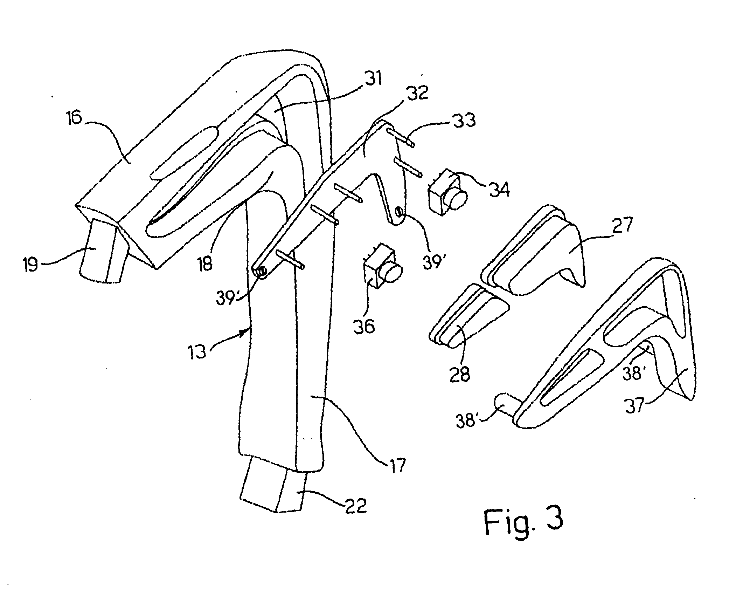

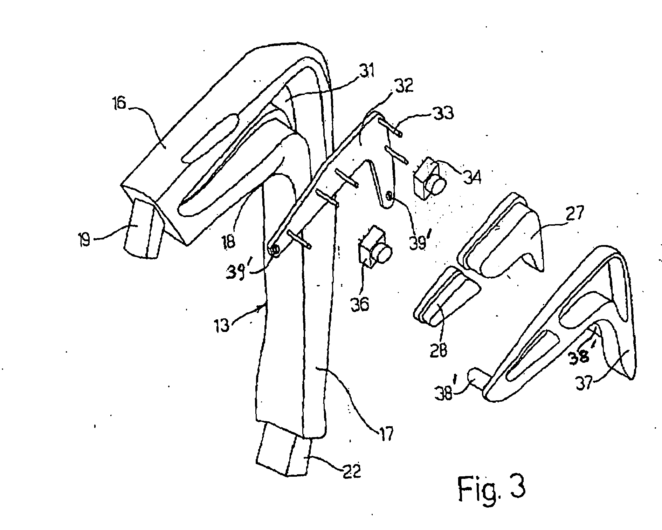

According to the invention, each grip 13, 14 comprises at least one end fittable frictionally inside a corresponding seat in supporting base 6. More specifically, each grip 13, 14 comprises two contoured, slightly arc-shaped arms 16 and 17 connected at an intersection 18 forming a slightly acute angle. In Figures 1 and 3, arms 16 and 17 of each grip 13, 14 also taper from intersection 18 towards their respective ends.

Each arm 16 is shorter in length than relative arm 17, and has a prismatic end appendix 19 which fits frictionally inside a corresponding seat 21. Each of the two seats 21 is arranged substantially at a corresponding end of minor base 9 of the trapezium of supporting base 6, so that each arm 16 extends upwards from minor base 9. Each arm 17 also has a prismatic end appendix 22, which fits frictionally inside a corresponding seat 23; and the two seats 23 are arranged substantially at corresponding ends of major base 8 of the trapezium of supporting base 6, so that each is arranged along a corresponding side 11, 12 of the trapezium.

The pair of grips 13, 14 can be selected from a number of pairs of grips of different shapes and/or sizes, designed for different driver requirements, habits, preferences or physical size, so that cloche-like steering wheel 5 can be fully customized. In Figures 1 and 3, arm 17 is appropriately arc-shaped, but is only contoured by tapering from intersection 18 towards appendix 22.

Figure 2 shows another grip 13 having an arm 17 shaped ergonomically for grip by the driver's hand. More specifically, arm 17 in Figure 2 comprises a depressed area 24 on which the driver's thumb rests, and a slightly convex area 25 forming an anatomical grip surface for the driver's hand, and may also comprise a downward-flaring area 26 for supporting the base of the driver's hand and improving grip. Obviously, the pairs of grips 13, 14 provided by the maker will include a pair best suited to the user of the vehicle to enable optimum customization of the steering wheel.

According to one aspect of the invention, each grip 13, 14 has at least one control button operated by the driver's thumb. More specifically, the right-hand grip 13 has two buttons 27 and 28 arranged at intersection 18 of the two arms 16 and 17, and the left-hand grip 14 has two buttons 29 and 30 also arranged at intersection 18 of corresponding arms 16 and 17.

Buttons 27 and 29 are angled in shape, extend along both relative arms 16 and 17, and control the right- and left-turn indicators respectively. Buttons 28 and 30 are each arranged along relative shorter arm 16, and control flashing or short-term operation of corresponding devices, in particular, a single sweep of the windscreen-wiper or flashing of the headlights.

To support buttons 27, 28 and 29, 30, each grip 13 and 14 has a cavity 31 (Figure 3) arranged at relative intersection 18; each cavity 31 houses a corresponding guide support 32 for respective buttons 27, 28 and 29, 30; and each guide support 32 is defined by a plate made of plastic material and having a number of pins 33 engaged by two electric microswitches 34 and 36.

Microswitches 34 and 36 are activated by respective buttons 27, 28 and 29, 30, which are advantageously back-lighted. Microswitches 34, 36 are connected electrically to electric wires housed or integrated in arm 16, and which are connected, for example, by pins not shown, to corresponding electric wires housed or integrated in supporting base 6.

Finally, each grip 13, 14 has a face plate 37 for respective buttons 27, 28 and 29, 30; and face plate 37 has appendixes 38', which are pressed inside corresponding seats 39' formed in guide support 32 and in cavity 31 at intersection 18 of arms 16 and 17.

A member or plate 57, which is pressed manually to sound the horn, is arranged at central portion 10 of supporting base 6, is slightly convex, and is substantially in the form of an isosceles trapezium having a major base 38 at minor base 9 of the trapezium of supporting base 6, and a minor base 39 adjacent to major base 8 of the trapezium of supporting base 6.

Supporting base 6 also comprises two lateral portions 41 and 42 housing two corresponding sets 43 and 44 of control buttons. Each set 43, 44 of buttons comprises a row 46, 47 of buttons parallel to the corresponding side 11, 12 of the trapezium of supporting base 6; and a group 48, 49 of buttons adjacent to central portion 10 of supporting base 6, and therefore to horn plate 57, and comprising four buttons arranged in a triangle.

More specifically, the row 46 of buttons in the right-hand set 43 comprises three buttons 51 for controlling all the windscreen-wiper functions; the left-hand row 47 of buttons comprises two light control buttons 52; and a third button 53 in row 47 of buttons and all the buttons in the two groups of buttons control various auxiliary vehicle functions, such as the power windows, fog lights, flashing parking lights, car radio, telephone, etc.

The buttons in both sets 43 and 44 are also back-lighted, and are fitted to supporting base 6 in the same way as buttons 27, 28 and 29, 30. More specifically, each row 46, 47 of buttons and each group 48, 49 of buttons are housed in corresponding cavities in supporting base 6, and have corresponding face plates.

The advantages, as compared with known steering wheels, of cloche-like steering wheel 5 according to the invention will be clear from the foregoing description. In particular, removable connection of grips 13 and 14, and the available range of differently contoured pairs of grips 13 and 14, provide for customizing steering wheel 5 according to both the habits and physical size of the driver.

Moreover, the arrangement of the control buttons on grips 13, 14 and supporting base 6 of steering wheel 5, and the symmetrical arrangement of the control buttons, make them easy to operate without the driver's hands being removed from steering wheel 5.

Clearly, changes may be made to the assembly system as described herein without, however, departing from the scope of the accompanying Claims. For example, changes may be made to the shape of supporting base 6 and/or of horn plate 57; one face plate may be provided for all the buttons in each set 43, 44 on respective lateral portion 41, 42; changes may be made to the arrangement of both sets 43, 44 on lateral portions 41, 42; and, finally, changes may be made to the way in which the buttons are fitted to grips 13, 14 and/or to lateral portions 41, 42 of supporting base 6.

## Claims

1. An automotive cloche-like steering wheel comprising a supporting base (6) fixed to a rotary steering column (7), a pair of grips (13, 14) connected to said supporting base (6), and control buttons (27, 28; 29, 30; 43, 44) arranged partly on said grips (13, 14) and partly on said supporting base (6); **characterized in that** each of said grips (13, 14) comprises a cavity (31) housing a guide support (32) for at least one button (27, 28, 29, 30) and at least an appendix (19, 22) which fits frictionally inside a corresponding seat (21, 23) in said supporting base (6).

2. A cloche-like steering wheel as claimed in Claim 1s, **characterized in that** said pair of grips (13, 14) are connected removably to said supporting base (6); said pair of grips (13, 14) being selected from a number of pairs of grips (13, 14) of different shape and size to permit customization of the steering wheel(5).

3. A cloche-like steering wheel as claimed in Claim 2, **characterized in that** said each of said grips (13, 14) comprises two arms (16, 17) at an angle with respect to each other and forming an intersection (18) between the same arms (16, 17), said cavity (31) being provided in said intersection (18).

4. A cloche-like steering wheel as claimed in Claim 3, **characterized in that** each one of said arms (16, 17) is provided at a respective end with a corresponding appendix (19, 22) adapted to fit frictionally inside a corresponding seat (21, 23) in said supporting base (6).

5. A cloche-like steering wheel as claimed in Claim 4, **characterized in that** said supporting base (6) is substantially in form of an isosceles trapezium, said seats (21, 22) being arranged substantially at the respective ends of said bases (9, 8) of the trapezium of said supporting base (6).

6. A cloche-like Steering wheel as claimed in one of Claims 3 to 5, **characterized in that** a first (17) of said arms (16, 17) is shaped for grip and is shaped ergonomically; said first arm (17) comprising a thumb-supporting area (24), an anatomical grip area (25) and a hand-supporting base area (26).

7. A cloche-like steering wheel as claimed in one of the foregoing Claims, **characterized in that** 15) said grips (13, 14) are positioned specularly on said supporting base (6).

8. A cloche-like steering wheel as claimed in one of the foregoing Claims, **characterized in that** said button (27, 28, 29, 30) is guided by a face plate (37), said guide support (32) having appendixes (38') adapted to be pressed inside a corresponding seat (39') in said guide support (32) and inside said cavity (31).

9. A cloche-like steering wheel as claimed in Claim 8, **characterized in that** each said guide support (32) houses at least one pair of buttons (27, 28; 29, 30) adapted to be thumb-operated.

10. A cloche-like steering wheel as claimed in Claim 9, **characterized in that** one button (27, 29) in each pair of buttons (27, 28; 29, 30) controls a corresponding turn indication, and the other button (28, 39) in each pair of buttons (27, 28; 29, 30) controls intermittent operation of a corresponding vehicle device.

11. A cloche-like steering wheel as claimed in Claim 10, **characterized in that** said intermittent operation comprises flashing the headlights and a single sweep of the windscreen-wiper.

12. A cloche-like steering wheel as claimed in Claim 5 and one of the Claims 6 to 11, **characterized in that** said supporting base (6) supports a horn control member (57) also substantially in the form of an isosceles trapezium with the major base (40) arranged at the minor (9) base of the trapezium of said supporting base (6).

13. A cloche-like steering wheel as claimed in Claim 12, **characterized in that** said supporting base (6) comprises a central portion (10), at which said horn control member (57) is arranged; and two lateral portions (41, 42), at which two corresponding sets (43, 44) of buttons are arranged; said sets (43, 44) of buttons being arranged substantially specularly with respect to each other.

14. A cloche-like steering wheel as claimed in Claim 13, **characterized in that** each of said sets (43, 44) of buttons comprises a row (46, 47) of buttons parallel to a relative side (11, 12) of the trapezium of said supporting base (6); and a group (48, 49) of buttons adjacent to said horn control member (57).

15. A cloche-like steering wheel as claimed in Claim 14, **characterized in that** one of said rows (46, 47) of buttons comprises windscreen-wiper control buttons (51); the other of said rows (46, 47) of buttons comprising light control buttons (52), said groups (48, 49) of buttons comprising auxiliary controls.

16. A cloche-like steering wheel as claimed in one of Claims 13 to 15, **characterized in that** each of said lateral portions (41, 42) comprises at least one further cavity for housing corresponding buttons of said sets (43, 44), and at least one corresponding face plate for guiding the buttons of said sets (43, 44) in said further cavity.

17. A cloche-like steering wheel as claimed in one of the foregoing Claims, **characterized in that** said buttons (27, 28; 29, 30; 43, 44) are back-lighted, and act on corresponding electric microswitches (34, 36).

## Patentansprüche

1. Steuerhornförmiges Kraftfahrzeug-Lenkrad mit einer Haltebasis (6), die an einer Drehlenksäule (7) befestigt ist, einem Paar von Griffen (13, 14), die mit der Haltebasis (6) verbunden sind, und Bedientasten (27, 28; 29, 30; 43, 44), die teilweise an den Griffen (13, 14) und teilweise an der Haltebasis (6) angeordnet sind, **dadurch gekennzeichnet, dass** jeder der Griffe (13, 14) einen Hohlraum (31), der eine Führungshalterung (32) für wenigstens eine Taste (27, 28, 29, 30) aufnimmt, und wenigstens einen Ansatz (19, 22) aufweist, welcher reibschlüssig in eine entsprechende Aufnahme (21, 23) in der Haltebasis (6) eingepasst ist.

2. Steuerhornförmiges Lenkrad wie in Anspruch 1 beansprucht, **dadurch gekennzeichnet, dass** das Paar von Griffen (13, 14) lösbar mit der Haltebasis (6) verbunden sind und dass das Paar von Griffen (13, 14) aus einer Anzahl von Paaren von Griffen (13, 14) unterschiedlicher Form und Größe ausgewählt sind, so dass eine kundenspezifische Anpassung des Lenkrades (5) ermöglicht ist.

3. Steuerhornförmiges Lenkrad wie in Anspruch 2 beansprucht, **dadurch gekennzeichnet, dass** jeder der Griffe (13, 14) zwei Arme (16, 17) aufweist, die sich in einem Winkel in Bezug zueinander befinden und die einen Zwischenabschnitt (18) zwischen den selbigen Armen (16, 17) bilden, wobei der Hohlraum (31) in dem Zwischenabschnitt (18) vorgesehen ist.

4. Steuerhornförmiges Lenkrad wie in Anspruch 3 beansprucht, **dadurch gekennzeichnet, dass** jeder der Arme (16, 17) an einem jeweiligen Ende mit einem entsprechenden Ansatz (19, 22) versehen ist, der zum reibschlüssigen Einpassen in eine korrespondierende Aufnahme (21, 23) in der Haltebasis (6) angepasst ist.

5. Steuerhornförmiges Lenkrad wie in Anspruch 4 beansprucht, **dadurch gekennzeichnet, dass** die Haltebasis (6) im Wesentlichen die Form eines gleichschenkligen Trapezes aufweist und dass die Aufnahmen (21, 22) im Wesentlichen an den jeweiligen Enden der Basen (9, 8) des Trapezes der Haltebasis (6) angeordnet sind.

6. Steuerhornförmiges Lenkrad wie in einem der Ansprüche 3 bis 5 beansprucht, **dadurch gekennzeichnet, dass** ein erster (17) der Arme (16, 17) zum Ergreifen geformt ist und ergonomisch geformt ist, wobei der erste Arm (17) einen Daumenstützbereich (24), einen anatomischen Greifbereich (25) und einen Handstütz-Basisbereich (26) aufweist.

7. Steuerhornförmiges Lenkrad wie in einem der vorhergehenden Ansprüche beansprucht, **dadurch gekennzeichnet, dass** die Griffe (13, 14) spiegelbildlich an der Haltebasis (6) angeordnet sind.

8. Steuerhornförmiges Lenkrad wie in einem der vorhergehenden Ansprüche beansprucht, **dadurch gekennzeichnet, dass** die Taste (27, 28, 29, 30) von einer Abdeckplatte (37) geführt ist und dass die Führungshalterung (32) Ansätze (38') aufweist, die angepasst sind zum Eindrücken in eine entsprechende Aufnahme (39') in der Führungshalterung (32) und in den Hohlraum (31).

9. Steuerhornförmiges Lenkrad wie in Anspruch 8 beansprucht, **dadurch gekennzeichnet, dass** jede Führungshalterung (32) wenigstens ein Paar von Tasten (27, 28; 29, 30) aufnimmt, die angepasst sind zur Daumenbetätigung.

10. Steuerhornförmiges Lenkrad wie in Anspruch 9 beansprucht, **dadurch gekennzeichnet, dass** eine Taste (27, 29) in jedem Paar von Tasten (27, 28; 29, 30) eine zugeordnete Abbiegeanzeige steuert und dass die andere Taste (28, 39) in jedem Paar von Tasten (27, 28; 29, 30) den intermittierenden Betrieb einer zugeordneten Fahrzeugeinrichtung steuert.

11. Steuerhornförmiges Lenkrad wie in Anspruch 10 beansprucht, **dadurch gekennzeichnet, dass** der intermittierende Betrieb ein Aufleuchten der Vorderlichter und einen Einzeldurchlauf des Scheibenwischers beinhaltet.

12. Steuerhornförmiges Lenkrad wie in Anspruch 5 und in einem der Ansprüche 6 bis 11 beansprucht, **dadurch gekennzeichnet, dass** die Haltebasis (6) ein Hupenbetätigungselement (57) hält, das ebenfalls im Wesentlichen die Form eines gleichschenkligen Trapezes aufweist, wobei die große Basis (40) an der kleinen Basis (9) des Trapezes der Haltebasis (6) angeordnet ist.

13. Steuerhornförmiges Lenkrad wie in Anspruch 12 beansprucht, **dadurch gekennzeichnet, dass** die Haltebasis (6) einen Mittelabschnitt (10), an dem das Hupenbetätigungselement (57) angeordnet ist, und zwei Seitenabschnitte (41, 42) aufweist, an denen zwei korrespondierende Sätze (43, 44) von Tasten angeordnet sind, wobei die Sätze (43, 44) von Tasten in Bezug aufeinander im Wesentlichen spiegelbildlich angeordnet sind.

14. Steuerhornförmiges Lenkrad wie in Anspruch 13 beansprucht, **dadurch gekennzeichnet, dass** jeder der Sätze (43, 44) von Tasten eine Reihe (46, 47) von Tasten, die parallel zu einer zugehörigen Seite (11, 12) des Trapezes der Haltebasis (6) ist, und eine Gruppe (48, 49) von Tasten aufweist, die benachbart zu dem Hupenbetätigungselement (57) sind.

15. Steuerhornförmiges Lenkrad wie in Anspruch 14 beansprucht, **dadurch gekennzeichnet, dass** die eine der Reihen (46, 47) von Tasten Scheibenwischer-Steuertasten (51) aufweist, die andere der Reihen (46, 47) von Tasten Lichtsteuertasten (52) aufweist und dass die Gruppen (48, 49) von Tasten Zusatzsteuerungen aufweisen.

16. Steuerhornförmiges Lenkrad wie in einem der Ansprüche 13 bis 15 beansprucht, **dadurch gekennzeichnet, dass** jeder der Seitenabschnitte (41, 42) wenigstens einen zusätzlichen Hohlraum zum Aufnehmen zugeordneter Tasten der Sätze (43, 44) und wenigstens eine entsprechende Abdeckplatte aufweist zum Führen der Tasten der Sätze (43, 44) in dem zusätzlichen Hohlraum.

17. Steuerhornförmiges Lenkrad wie in einem der vorhergehenden Ansprüche beansprucht, **dadurch gekennzeichnet, dass** die Tasten (27, 28; 29, 30; 43, 44) hintergrundbeleuchtet sind und auf zugeordnete, elektrische Mikroschalter (34, 36) einwirken.

## Revendications

1. Volant d'automobile de type cloche comprenant une base de support (6) fixée à une colonne de direction rotative (7), une paire de poignées (13, 14) raccordées à ladite base de support (6), et des boutons de commande (27, 28 ; 29, 30 ; 43, 44) agencés partiellement sur lesdites poignées (13, 14) et partiellement sur ladite base de support (6) ; **caractérisé en ce que** chacune desdites poignées (13, 14) comprend une cavité (31) logeant un support de guidage (32) pour au moins un bouton (27, 28, 29, 30) et au moins un élément annexe (19, 22) qui s'ajuste par frottement à l'intérieur d'un logement correspondant (21, 23) dans ladite base de support (6).

2. Volant de type cloche selon la revendication 1, **caractérisé en ce que** ladite paire de poignées (13, 14) est raccordée de façon amovible à ladite base de support (6) ; ladite paire de poignées (13, 14) étant sélectionnée à partir d'un nombre de paires de poignées (13, 14) de différentes formes et tailles pour permettre la personnalisation du volant (5).

3. Volant de type cloche selon la revendication 2, **caractérisé en ce que** chacune desdites poignées (13, 14) comprend deux bras (16, 17), selon un certain angle l'un par rapport à l'autre et formant une intersection (18) entre ces mêmes bras (16, 17), ladite cavité (31) étant fournie dans ladite intersection (18).

4. Volant de type cloche selon la revendication 3, **caractérisé en ce que** chacun desdits bras (16, 17) est muni, au niveau d'une extrémité respective, d'un élément annexe correspondant (19, 22) conçu pour s'adapter par frottement à l'intérieur d'un logement correspondant (21, 23) dans ladite base de support (6).

5. Volant de type cloche selon la revendication 4, **caractérisé en ce que** ladite base de support (6) a sensiblement la forme d'un trapèze isocèle, lesdits logements (21, 22) étant agencés sensiblement au niveau des extrémités respectives desdites bases (9, 8) du trapèze de ladite base de support (6).

6. Volant de type cloche selon l'une quelconque des revendications 3 à 5, **caractérisé en ce qu'**un premier (17) desdits bras (16, 17) est façonné pour la préhension de la poignée et est façonné de façon ergonomique ; ledit premier bras (17) comprenant une zone de support du pouce (24), une zone de préhension anatomique (25) et une zone de base de support de la main (26).

7. Volant de type cloche selon l'une quelconque des revendications précédentes, **caractérisé en ce que** lesdites poignées (13, 14) sont positionnées de façon spéculaire sur ladite base de support (6).

8. Volant de type cloche selon l'une quelconque des revendications précédentes, **caractérisé en ce que** ledit bouton (27, 28, 29, 30) est guidé par une plaque frontale (37), ledit support de guidage (32) ayant des éléments annexes (38') conçus pour être appuyés à l'intérieur d'un logement correspondant (39') dans ledit support de guidage (32) et à l'intérieur de ladite cavité (31).

9. Volant de type cloche selon la revendication 8, **caractérisé en ce que** chacun desdits supports de guidage (32) loge au moins une paire de boutons (27, 28 ; 29, 30) conçus pour être actionnés par le pouce.

10. Volant de type cloche selon la revendication 9, **caractérisé en ce qu'**un bouton (27, 29) dans chaque paire de boutons (27, 28 ; 29, 30) commande une indication de virage correspondante, et l'autre bouton (28, 39) dans chaque paire de boutons (27, 28 ; 29, 30) commande le fonctionnement par intermittence d'un dispositif de véhicule correspondant.

11. Volant de type cloche selon la revendication 10, **caractérisé en ce que** ledit fonctionnement par intermittence comprend l'allumage des phares et un seul passage de l'essuie-glace.

12. Volant de type cloche selon la revendication 5 et selon l'une quelconque des revendications 6 à 11, **caractérisé en ce que** ladite base de support (6) supporte un élément de commande de l'avertisseur sonore (57) qui a également sensiblement la forme d'un trapèze isocèle, la grande base (40) étant agencée au niveau de la petite base (9) du trapèze de ladite base de support (6).

13. Volant de type cloche selon la revendication 12, **caractérisé en ce que** ladite base de support (6) comprend une partie centrale (10), au niveau de laquelle ledit élément de commande de l'avertisseur sonore (57) est agencé ; et deux parties latérales (41, 42), au niveau desquelles deux ensembles correspondants (43, 44) de boutons sont agencés ; lesdits ensembles (43, 44) de boutons étant agencés de façon sensiblement spéculaire l'un part rapport à l'autre.

14. Volant de type cloche selon la revendication 13, **caractérisé en ce que** chacun desdits ensembles (43, 44) de boutons comprend une rangée (46, 47) de boutons parallèle à un côté relatif (11, 12) du trapèze de ladite base de support (6) ; et un groupe (48, 49) de boutons adjacents audit élément de commande de l'avertisseur sonore (57).

15. Volant de type cloche selon la revendication 14, **caractérisé en ce que** l'une desdites rangées (46, 47) de boutons comprend les boutons de commande des essuie-glaces (51) ; l'autre desdites rangées (46, 47) de boutons comprenant les boutons de commande de l'éclairage (52), lesdits groupes (48, 49) de boutons comprenant des commandes auxiliaires.

16. Volant de type cloche selon l'une quelconque des revendications 13 à 15, **caractérisé en ce que** chacune desdites parties latérales (41, 42) comprend au moins une autre cavité pour loger les boutons correspondants desdits ensembles (43, 44), et au moins une plaque frontale correspondante pour guider les boutons desdits ensembles (43, 44) dans ladite autre cavité.

17. Volant de type cloche selon l'une quelconque des revendications précédentes, **caractérisé en ce que** lesdits boutons (27, 28 ; 29, 30 ; 43, 44) sont éclairés, et agissent sur des microcommutateurs électriques correspondants (34, 36).
